# EUROPÄISCHE PATENTANMELDUNG

(11) **EP 4 154 702 A1**
(43) Veröffentlichungstag der Anmeldung: **29.03.2023**
(21) Anmeldenummer: 22197697.0
(22) Anmeldetag: 26.09.2022
(51) Int. Cl.: A01G 9/02, A01G 27/00, A01G 31/06

(54) **BEHÄLTER ZUM ANZÜCHTEN VON BLUMENZWIEBELN MIT EINEM ÜBERLAUFDORN**

(30) Priorität: 27.09.2021 DE 202021105178 U; 25.02.2022 DE 202022101083 U
(71) Anmelder: bekuplast Gesellschaft mit beschränkter Haftung, 49824 Ringe (DE)
(72) Erfinder: ROELOFS, Christian, 49824 Ringe (DE)
(74) Vertreter: Schulze Horn, Kathrin

(57) **Zusammenfassung**

Die Erfindung betrifft einen Behälter (2) insbesondere zur Aufzucht von Blumenzwiebeln und dergleichen mit einer Grundfläche (3) und Seitenwänden (4) und mit einer Durchbrechung (6) in der Grundfläche (3) an der ein Überlaufdorn (1) mit einem Gehäuse (10) angeordnet ist und der Überlaufdorn (1) mit mindestens einer oberseitigen Öffnung (11) ausgestattet ist, um ein Hindurchfließen von einer Flüssigkeit in einer Fließrichtung (F) zu ermöglichen, wobei zur einfachen Herstellung der Überlaufdorn (1) einstückig mit dem Behälter (2) ausgebildet ist. Weiterhin wird ein entsprechendes Herstellungsverfahren angegeben.

## Beschreibung

Die Erfindung betrifft einen Behälter zum Anzüchten von Blumenzwiebeln mit einem Überlaufdorn.

In Gartenbaubetrieben, Gärtnereien und dergleichen werden Blumen und Pflanzen gezüchtet und vermehrt. Dabei werden die Blumenzwiebeln beispielsweise von Tulpen, Liliengewächsen oder Amaryllisgewächsen in einem Behälter aufgezüchtet. Der Behälter weist üblicherweise eine standardisierte Größe auf und ist als Kunststoff-Spritzgussteil ausgebildet und mit gleichartigen Behältern stapelbar.

Um die Blumenzwiebeln mit ausreichend Flüssigkeit versorgen zu können und die Blumenzwiebeln geordnet wachsen lassen zu können, sind an einer Grundfläche des Behälters beispielsweise Positionierungseinrichtungen insbesondere in der Form von Dornen ausgebildet, auf die die Blumenzwiebeln aufgesteckt werden. Während des Wachstums treibt die Blumenzwiebel Wurzeln aus, die sich um Strukturen des Behälters und insbesondere der Dornen winden können und somit einen festen Sitz der Blumenzwiebel im Behälter gewährleisten. Der Behälter wird zum Wachstum der Blumenzwiebeln mit Wasser versorgt. Gegebenenfalls kann auch ein Substrat wie Erde, Blähton oder dergleichen im Behälter vorhanden sein, um die Blumenzwiebeln mit Nährstoffen zu versorgen. Auch eine Düngung mit verschiedenen Stoffen ist möglich. Die Behälter werden meist in einem Gewächshaus angeordnet, um eine ausreichende Versorgung mit Tageslicht und Wärme zu gewährleisten.

Die NL 2015866 A1 offenbart einen Behälter zum Züchten von Blumenzwiebeln aus Kunststoff. Der Behälter weist eine im Wesentlichen rechteckige Grundfläche auf mit Seitenwänden und er ist nach oben offen. Auf der Grundfläche sind Dorne ausgebildet, auf die die Blumenzwiebeln zum Wachstum aufgespießt werden können. Während des Wachstums treiben die Blumenzwiebeln Wurzeln aus, die sich um die Strukturen des Behälters winden. Weiterhin ist an der Grundfläche mittig ein Überlauf ausgebildet. Der Behälter wird von oben her mit Wasser oder Nährlösung befüllt. Sobald ein Wasserpegel die Höhe des Überlaufs erreicht hat, fließt es durch dessen oberseitige Öffnung nach unten ab, um einen weiteren, gleichartigen Behälter, auf den dieser aufgestapelt ist, ebenfalls zu bewässern.

Weiterhin ist es bekannt, den Überlauf lediglich als Durchbrechung in der Grundfläche auszubilden. In diese Durchbrechung wird dann ein separater Überlaufdorn gesteckt und vorzugsweise lösbar befestigt wie eingeschraubt oder verrastet. Der Überlaufdorn ist im Wesentlichen als hohlzylindrisches Gehäuse mit einer oberseitigen Öffnung ausgebildet. Durch die Höhe des Überlaufdorns kann die Höhe des Pegelstands von Wasser oder Nährlösung im Behälter vorgegeben werden.

Um dabei eine Beschädigung der Blumenzwiebeln durch auftreffendes und herumspritzendes Wasser zu vermeiden ist der Überlaufdorn, der auch im unterhalb angeordneten Behälter vorhanden ist, mit einem vorzugsweise konisch oder pilzförmig ausgebildeten Deckel ausgestattet, um das von oben auftreffende Wasser gleichmäßig im Behälter zu verteilen.

Für die vorliegende Erfindung stellt sich deshalb ausgehend von diesem Stand der Technik die Aufgabe, einen Behälter der vorstehend genannten Art zu schaffen, mit dem eine gleichmäßige Bewässerung eines weiteren Behälters gewährleistet und der in einfacher Weise herstellbar und transportierbar ist.

Die Lösung dieser Aufgabe gelingt erfindungsgemäß mit einem Behälter, der die Merkmale des Patentanspruchs 1 aufweist beziehungsweise der nach einem Verfahren gemäß dem Patentanspruch 12 hergestellt wurde.

In an sich bekannter Weise ist ein Überlaufdorn ein im Wesentlichen zylindrisches Gehäuse mit einer oberseitigen Öffnung und dementsprechend einem unterseitigen Auslass. Der Überlaufdorn ist an einer Durchbrechung der Grundfläche des Behälters angeordnet, wobei an der Grundfläche auch Seitenwände angeordnet sind. Eine Flüssigkeit wie Wasser kann durch die oberseitige Öffnung hindurch aus dem Behälter in einer Fließrichtung nach unten abfließen. Durch die Höhe der oberseitigen Öffnung des Überlaufdorns beziehungsweise deren Abstand zur Grundfläche des Behälters ist der Pegelstand des Wassers im Behälter vorgegeben.

Erfindungsgemäß ist der Überlaufdorn mit dem gesamten Behälter einstückig ausgebildet beziehungsweise die beiden bisher getrennten Bauteile werden nunmehr einstückig hergestellt. Dies kann im Rahmen der Erfindung in an sich beliebiger Weise erfolgen, bevorzugt jedoch wie im Folgenden beschrieben.

Der Vorteil der Erfindung besteht darin, dass die Handhabung des Behälters mit dem einstückig ausgebildeten Überlaufdorn erheblich vereinfacht ist. Es müssen nicht mehr zwei separate Produktionsschritte ausgeführt werden und ein Verlieren des Überlaufdorns während Transport oder Lagerung des Behälters ist ausgeschlossen.

Mehrere gleichartige Behälter sind übereinander stapelbar. Hierzu sind die einstückigen Überlaufdorne mit einer entsprechenden Höhe ausgebildet, um nicht nach oben über die Seitenwände hinaus überzustehen. Zur Versorgung der Blumenzwiebeln wird von oben auf den obersten Behälter Wasser oder Nährlösung oder dergleichen eingebracht. Der Flüssigkeitspegel im obersten Behälter steigt so lange an bis dieser die oberseitige Öffnung am Überlaufdorn erreicht. Nachfolgend fließt das Wasser durch den Überlaufdorn nach unten, trifft dort vorzugsweise auf den konischen Deckel des gleichartig ausgebildeten Überlaufdorns im gleichartig ausgebildeten Behälter und wird durch diesen im Wesentlichen spritzfrei in diesem unterhalb angeordneten Behälter verteilt. Dies kann dann mehrfach wiederholt werden.

Im Rahmen der Erfindung ist es mit umfasst, dass ein Behälter mit zwei oder mehr vorzugsweise symmetrisch verteilt angeordneten einstückigen Überlaufdornen ausgestattet sein kann.

Vorteilhafte Ausgestaltungen der Erfindung sind der Gegenstand von Unteransprüchen.

Gemäß einer ersten Ausgestaltung sind im Inneren des Überlaufdorns vorzugsweise vier Leitflächen ausgebildet, so dass im Inneren des hohlzylindrischen Gehäuses vier Strömungskanäle für das Wasser gebildet sind. Das Wasser tritt dann an der Unterseite der Durchbrechung beziehungsweise des Überlaufdorns aus diesem aus und bewässert den darunterliegenden Behälter. Im Gehäuse des Überlaufdorns sind somit mehrere Strömungskanäle für die Flüssigkeit gebildet.

Nach einer bevorzugten Weiterbildung sind die Leitflächen im Gehäuse zumindest abschnittsweise nicht mit dem Gehäuse verbunden. Das bedeutet, dass die beispielsweise vier symmetrisch angeordneten Leitflächen innerhalb des Gehäuses zwar beispielsweise in der Fließrichtung von oben nach unten gesehen in einem oberen Bereich nahe der oberseitigen Öffnung beziehungsweise den oberseitigen Öffnungen mit dem Gehäuse verbunden und insbesondere einstückig mit diesem ausgebildet sind. In Fließrichtung nach unten gesehen kann dann beispielsweise durch eine radiale Verkürzung der Leitflächen ein zunehmender Abstand zwischen den radial nach außen weisenden Leitflächen und dem diese im Wesentlichen rotationssymmetrisch umgebenden Gehäuse erhalten werden. Durch diesen Abstand zwischen den radial nach außen weisenden Leitflächen und dem umgebenden Gehäuse wird erreicht, dass das nach unten fließende Wasser, die Nährlösung oder dergleichen in der Mitte des Überlaufdorns zusammengeführt wird. Das Wasser wird derart zwangsgeführt, um mittig und gebündelt unterseitig aus dem Überlaufdorn als einzelner Strahl auszutreten. Das Wasser tritt als Bündel aus und nicht als einzelne Wasserfäden oder Rinnsale. Der einheitliche Wasserstrahl trifft dann von oben her beispielsweise auf den im Folgenden beschriebenen Deckel des Überlaufdorns des darunter angeordneten Behälters und wird von diesem aufgrund seiner konischen Formgebung im Wesentlichen radialsymmetrisch in diesem Behälter verteilt.

Beispielsweise kann ein solcher Übergang, an dem die Leitflächen nicht mehr in Verbindung mit dem Gehäuse des Überlaufdorns stehen, in halber Höhe des Überlaufdorns ausgebildet sein.

Dabei können die Leitflächen entweder innerhalb des Gehäuses, in Fließrichtung des Wassers von oben nach unten gesehen, enden oder nach unten aus diesem herausragen.

Im Inneren des Gehäuses des Überlaufdorns können beispielsweise vier vorzugsweise symmetrisch angeordnete Leitflächen ausgebildet sein, es könnten auch nur drei oder fünf oder mehr Leitflächen vorgesehen sein, um das überfließendes Wasser nach unten zu leiten.

Mit den Leitflächen wird erreicht, dass durch die Trennung in Fließrichtung nach unten zwischen den radial nach außen weisenden Leitflächen im Inneren des Gehäuses des Überlaufdorns und dem diese umgebenden Gehäuse das Wasser mittig als einzelner Strahl gebündelt wird. Somit wird ein kontinuierlicher Wasserstrahl erhalten, der insbesondere durch den darunter angeordneten pilzförmigen oder konischen Deckel des Überlaufdorns im darunterliegenden Behälter gleichmäßig insbesondere ringförmig in diesem Behälter verteilt wird. Es wird ein unkontrolliertes Umherspritzen von Wasser vermieden, das zu einer Beschädigung der wachsenden Zwiebeln und damit zu Fäulnis und Produktionsausfall führen würde.

Um die Ausbildung eines einheitlichen oder gebündelten Wasserstrahls an einem unterseitigen Austritt des Überlaufdorns zu unterstützen sind die Leitflächen im Inneren des Gehäuses des Überlaufdorns vorzugsweise derart ausgeformt, dass sie in Fließrichtung des Wassers gesehen von oben nach unten spitz zulaufen. Das bedeutet, dass sich ihre radiale Ausdehnung, vorzugsweise ab dem Ort, ab dem keine Verbindung mehr zum umgebenden Gehäuse besteht, zunehmend verringert. Durch dieses Zuspitzen oder nach unten konische Zulaufen wird das herabfließende Wasser zu den sich mittig verjüngenden Leitflächen hin gelenkt beziehungsweise liegt an diesen an. Im Ergebnis wird ein einheitlicher, kompakter Wasserstrahl erzeugt, der auf dem unterhalb angeordneten Deckel des darunter befindlichen Überlaufdorns im darunter befindlichen Behälter zur Anzucht von Blumenzwiebeln vorhanden ist.

Weiterhin ist vorgeschlagen, dass im Gehäuse eine Schulter, Stufe, ein Absatz oder dergleichen ausgebildet ist, um den Innendurchmesser des Gehäuses in Fließrichtung des Wassers von oben nach unten gesehen stufenartig zu erhöhen. Das bedeutet, dass das die Leitflächen umgebende Gehäuse beispielsweise in halber Höhe des Gehäuses eine Stufe aufweist mit einer Aufweitung. Dadurch werden die innenliegenden Leitflächen von dem umgebenden Gehäuse getrennt und das herabfließende Wasser wird an den Leitflächen, die sich ihrerseits in Fließrichtung gesehen ebenfalls radial verjüngen können, geführt, um als einheitlicher Wasserstrahl nah unten austreten zu können. Dabei kann das Gehäuse von außen gesehen ebenfalls eine Stufe aufweisen oder eine kontinuierliche Vergrößerung seines Radius.

Schließlich ist vorgeschlagen, dass an der oberseitigen Öffnung ein oder mehrere beispielsweise drei, vier oder fünf Schlitze ausgebildet sind. Ein solcher Schlitz verringert die Höhe des Wasserpegels, der im Behälter maximal erreicht werden kann, da durch den Schlitz dann das Wasser im Behälter durch die oberseitige Öffnung im Überlaufdorn abfließen kann. Es versteht sich, dass die Schlitze im Umfang des Überlaufdorns gesehen vorzugsweise symmetrisch angeordnet sind und im Wesentlichen senkrecht von oben nach unten verlaufen. Die Schlitze sind vorzugsweise symmetrisch zwischen zwei benachbarten Leitflächen angeordnet und somit ebenfalls bevorzugt zwischen zwei benachbarten Stegen oberseitig am Gehäuse, die dessen Deckel abstützen.

Oberhalb der oberseitigen Öffnung des Überlaufdorns beziehungsweise von dessen Gehäuse ist ein vorzugsweise pilzförmiger oder nach oben, also entgegen einer natürlichen Fließrichtung von Wasser oder Nährlösung, konisch zulaufender Deckel angeordnet. Der Deckel ist beispielsweise über Stege mit dem Gehäuse verbunden und vorzugsweise einstückig mit diesem ausgebildet.

Zusätzlich kann der Behälter mit Positionierungseinrichtungen insbesondere in der Form von Dornen ausgestattet sein. Auf die Dorne können Blumenzwiebeln für deren weiteres Wachstum aufgesteckt oder aufgespießt und somit fixiert werden.

Vorzugsweise sind die nach oben weisenden Dorne an der Grundfläche des Behälters mit Widerhaken ausgestattet. Das bedeutet, dass die Dorne, die beispielsweise als integraler Bestandteil des Behälters in Form eines Kunststoff-Spritzgussteils ausgebildet sind, ihrerseits profiliert ausgebildet sind und nicht nur im Wesentlichen kegel- oder kegelstumpfförmig. Die Profilierung beziehungsweise die Ausgestaltung der Widerhaken kann unter anderem als jeweils um die Dorne umlaufende Schultern, Knicke oder Vorsprünge ausgestaltet sein. Dabei ist der Begriff Widerhaken derart auszulegen, dass die Dorne von einer üblicherweise konischen und/oder kegelstumpfförmigen Grundform abweichen. Beispielsweise erfolgt eine Querschnittsverjüngung von unten nach oben stufen- oder knickartig, um Schultern oder Kanten am Außenumfang der Dorne auszubilden. Auch können die Dorne derart mit Ausbuchtungen, Hinterschnitten, Vorsprüngen und dergleichen ausgestattet sein, dass sich tatsächlich eine hakenartige Ausformung bildet beispielsweise entsprechend eines Angelhakens.

Es versteht sich, dass Form, Ausdehnung und Anzahl der Widerhaken an den Dornen im Prinzip an jedem Dorn anders gewählt werden könnte, bevorzugt jedoch an allen Dornen eines Behälters gleichartig. Dabei kann die Anzahl, die Größe, der gegenseitige Abstand der Dorne sowie deren Formgebung auch auf eine bestimmte zu züchtende Blumenart beziehungsweise deren Zwiebel angepasst sein. Das bedeutet, dass je größer eine Blumenzwiebel ist desto weniger Dorne pro Grundfläche des Behälters sind vorgesehen. Auch können für größere Blumenzwiebeln größere Widerhaken, umlaufende Schultern oder Vorsprünge an den Dornen ausgebildet sein als für kleinere Blumenzwiebeln.

Der Vorteil der Widerhaken besteht darin, dass durch die Widerhaken, Vorsprünge oder dergleichen an den Dornen sich die Blumenzwiebeln während des Keimprozesses, wenn also Wurzeln ausgetrieben werden, sich mit diesen Wurzeln zusätzlich an den Widerhaken verhaken oder einhängen können. Somit wird beim weiteren Wachstum automatisch vermieden, dass sich die Blumenzwiebeln unter anderem durch das Wurzelwachstum nach oben von den Dornen, auf denen sie aufgesetzt sind, wegdrücken oder abheben, da sie ja durch die sich verhakenden Wurzeln auf den Dornen fixiert sind. Somit liegen die Blumenzwiebeln beziehungsweise die Keimlinge nicht lose und ungeordnet im Behälter und können derart optimal gepflegt werden.

Ist das Wachstum derart gediehen wie gewünscht können die gekeimten Blumenzwiebeln aus dem Behälter entnommen werden. Hierzu können die Wurzeln, die sich an den Dornen verhakt haben, mit herausgezogen oder gegebenenfalls mit einem Schneidwerkzeug abgeschnitten werden.

Zur Vereinfachung der Herstellung des Behälters insbesondere als bevorzugt einstückiges Kunststoff-Spritzgussteil sind die Dorne entlang ihres jeweiligen Umfangs gesehen nur halbseitig oder zumindest teilweise mit Widerhaken, Vorsprüngen, Kanten, Schultern oder dergleichen ausgestattet. Dies erleichtert die Herstellung als Kunststoff-Spritzgussteil mit der bekannten Schiebertechnik.

Weiterhin ist vorgeschlagen, dass zwischen den einzelnen nach oben weisenden Dornen an der Grundfläche des Behälters Verbindungsstege ausgebildet sind. Diese Verbindungsstege sind dabei von der Grundfläche beabstandet, so dass zwischen der Grundfläche und den Dornen mit Verbindungsstegen jeweils Durchlässe gebildet sind, die von den Wurzeln der Blumenzwiebeln bei deren Wachstum durchgriffen werden können. Dies sorgt für ein zusätzliches Verhaken der Wurzeln, um das nach oben Abheben oder Hochdrücken der Blumenzwiebeln von den Dornen während des Wachstums zuverlässig zu unterbinden. Die Verbindungsstege oder Rippen müssen nicht notwendigerweise zwischen allen benachbarten Dornen ausgebildet sein, sondern können auch jeweils nur reihen- oder zeilenweise vorgesehen werden.

Zur einfachen Herstellung des einstückigen Behälters mit Überlaufdorn sowie gegebenenfalls den zusätzlichen Dornen ist ein Kunststoff-Spritzgießverfahren vorgeschlagen.

Im Folgenden wird ein Ausführungsbeispiel der Erfindung anhand einer Zeichnung näher erläutert. Die Figuren der Zeichnung zeigen:
- Figur 1:: zwei aufeinander gestapelte Behälter in Seitenansicht,
- Figur 2:: zwei Überlaufdorne,
- Figur 3:: Schnittdarstellungen der Überlaufdorne,
- Figur 4:: eine weitere Schnittdarstellung eines Überlaufdorns,
- Figur 5:: einen Überlaufdorn von schräg unten,
- Figur 6:: einen Behälter in perspektivischer Ansicht,
- Figur 7:: den Behälter mit einer auf Dorne aufgesteckten Blumenzwiebel,
- Figur 8:: eine Ausschnittvergrößerung aus Figur 3,
- Figur 9:: eine weitere Ausschnittvergrößerung aus Figur 3 und
- Figur 10:: eine Detailansicht der Dorne an der Grundfläche des Behälters.

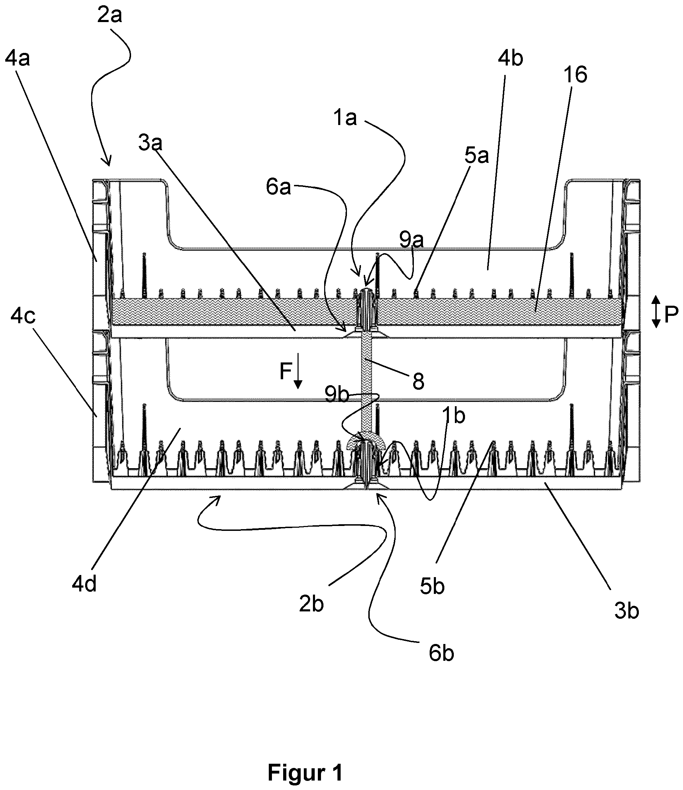

In den rein schematischen Figuren 1 bis 10 bezeichnen die gleichen Bezugszeichen jeweils die gleichen Komponenten. Dies gilt auch für die entsprechenden nachfolgenden Beschreibungsteile.

In Figur 1 sind zwei Behälter 2a, 2b jeweils mit einer Grundfläche 3a, 3b oder einem Boden sowie jeweils vier Seitenwänden 4a, 4b, 4c, 4d in Seitenansicht abgebildet. Die Behälter 2 sind vorzugsweise als einstückiges Kunststoff-Spritzgussteil ausgebildet und dienen der Anzucht von Blumenzwiebeln. Hierzu werden auf Dorne 5a, 5b an oder auf den Grundflächen 3a, 3b jeweils Blumenzwiebeln aufgesteckt. An den Dornen 5a, 5b können auch Widerhaken ausgebildet sein, um das selbsttätige Abheben einer Blumenzwiebel während ihres Wachstums zu unterbinden. Die Behälter 2a, 2b sind im Wesentlichen identisch ausgebildet und aufeinander stapelbar. Weiterhin ist in der Grundfläche 3a, 3b jeweils eine Durchbrechung 6a, 6b ausgebildet, um ein Abfließen von Wasser 16, das hier schraffiert angedeutet ist, Nährlösung oder dergleichen aus einem oberen Behälter 2a in einen darunter gestapelten Behälter 2b in Fließrichtung F wie durch den Pfeil angedeutet zu ermöglichen.

In den Behältern 2a, 2b ist an oder in den Durchbrechungen 6a, 6b jeweils ein Überlaufdorn 1a, 1b angeordnet, der beispielsweise als separates Bauteil ausgebildet ist und in den Durchbrechungen 6a, 6b im Wesentlichen wasserdicht eingesetzt und verrastet oder verschraubt ist. Durch die Überlaufdorne 1 wird in den Behältern 2 jeweils ein maximales Niveau beziehungsweise ein Pegel P der Flüssigkeit wie Wasser 16, Nährlösung oder dergleichen im Behälter 2 vorgegeben, wie durch den Doppelpfeil angedeutet. Ist dieser Pegelstand P erreicht so läuft das Wasser 16 an einer oberseitigen Öffnung 11 an einer Oberseite oder einem nach oben weisenden Ende des Überlaufdorns 1 durch diesen hindurch nach unten ab, um einen darunterliegenden Behälter 2b mit Wasser zu befüllen wie durch die Fließrichtung mit dem Pfeil F angedeutet. Beispielsweise können drei oder mehr im Wesentlichen gleichartige Behälter 2 mit Überlaufdornen 1 übereinandergestapelt sein.

Mit dem Wasser 16, der Nährlösung oder dergleichen werden die auf die Dornen 5 aufgesteckten Blumenzwiebeln für deren Wachstum versorgt, bis diese das gewünschte Stadium erreicht haben. Durch die Behälter 2 mit Überlaufdornen 1 kann dies weitestgehend automatisiert erfolgen.

Aus dem oberen Überlaufdorn 1a fließt aufgrund seiner inneren Formgebung, die im Folgenden beschrieben wird, ein im Wesentlichen einheitlicher oder gebündelter Wasserstrahl 8, der hier schraffiert angedeutet ist, nach unten aus einem unterseitigen Auslass 15 des Überlaufdorns 1 ab. Der Wasserstrahl 8 trifft dann im Wesentlichen senkrecht von oben auf den Deckel 9b des Überlaufdorns 1b im unterhalb angeordneten Behälter 2b. Am oberen Überlaufdorn 1a ist natürlich ebenfalls ein Deckel 9a vorgesehen. Die Deckel 9 sind vorzugsweise konisch oder pilzförmig ausgebildet, um das von oben herabfließende Wasser 16 im Wesentlichen radialsymmetrisch im umgebenden Behälter 2 zu verteilen.

Durch die Deckel 9 wird das von oben gebündelt auftreffende Wasser 16 oder Fluid im Wesentlichen gleichförmig und symmetrisch im Behälter 2 verteilt. Es wird im Wesentlichen spritzfrei und kreisförmig abgelenkt. Dadurch werden Beschädigungen der umgebenden nahebei angeordneten Blumenzwiebeln wirkungsvoll vermieden, die beispielsweise zu Fäulnis führen könnten und eine gleichmäßige Versorgung des Behälters 2 mit Flüssigkeit gewährleistet.

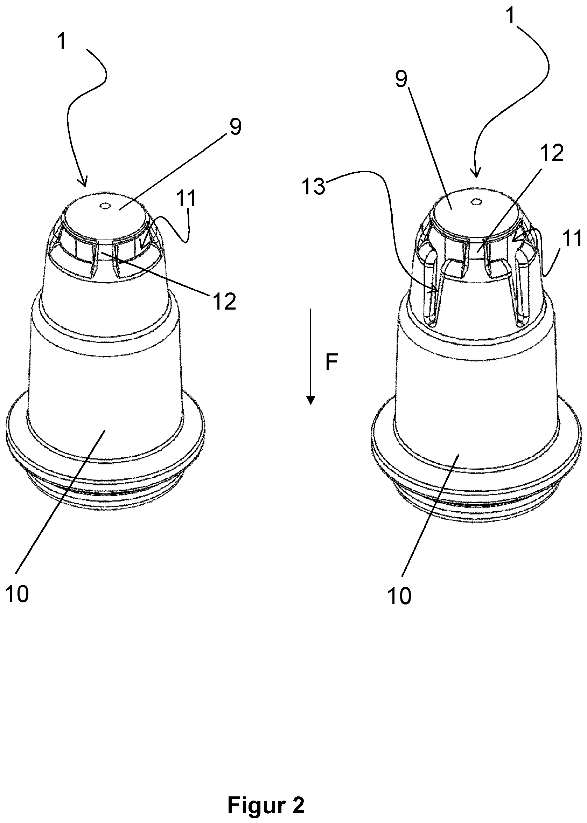

In Figur 2 sind zwei Überlaufdorne 1 abgebildet. Diese bestehen im Wesentlichen aus einem zylindrischen Gehäuse 10 an dem oberseitig jeweils ein Deckel 9 wie beispielsweise hier mit vier radialsymmetrisch verteilten Stegen 12 einstückig angeformt ist. Es können auch drei, fünf oder mehr Stege 12 vorgesehen sein insbesondere entsprechend der Anzahl der nachfolgend beschriebenen Leitflächen 7. Zwischen den Stegen 12 sind oberseitige Öffnungen 11 am Gehäuse 10 der Überlaufdorne 1 ausgebildet. Durch diese Öffnungen 11 kann beispielsweise Wasser 16 aus einem Behälter 2, sobald es den Pegelstand P der durch die Höhe des Gehäuses 10 beziehungsweise der oberseitigen Öffnungen 11 über der Grundfläche 3 des Behälters 2 vorgegeben ist, nach unten durch das Gehäuse 10 hindurch in Richtung F abfließen. Der Überlaufdorn 1 ist vorzugsweise lösbar und wasserdicht in einer Durchbrechung 6 in einer Grundfläche 3 eines Behälters 2 zur Anzucht von Blumenzwiebeln verrastet, verschraubt oder in sonstiger Weise lösbar befestigt. Prinzipiell kann der Überlaufdorn 1 auch einstückig mit dem Behälter 2 ausgebildet sein.

Durch die Schlitze 13 im Gehäuse 10 des Überlaufdorns 1 wird eine Absenkung des Pegels P im Behälter 1 erreicht. Dabei kann zur Einstellung eines gewünschten Pegels P ein entsprechend ausgebildeter Überlaufdorn 1 in den Behälter 2 eingesetzt werden. Die Schlitze 13 sind vorzugsweise senkrecht von oben nach unten beziehungsweise in Fließrichtung F des Wassers ausgebildet und erstrecken sich von den oberseitigen Öffnungen 11 nach unten in Fließrichtung F.

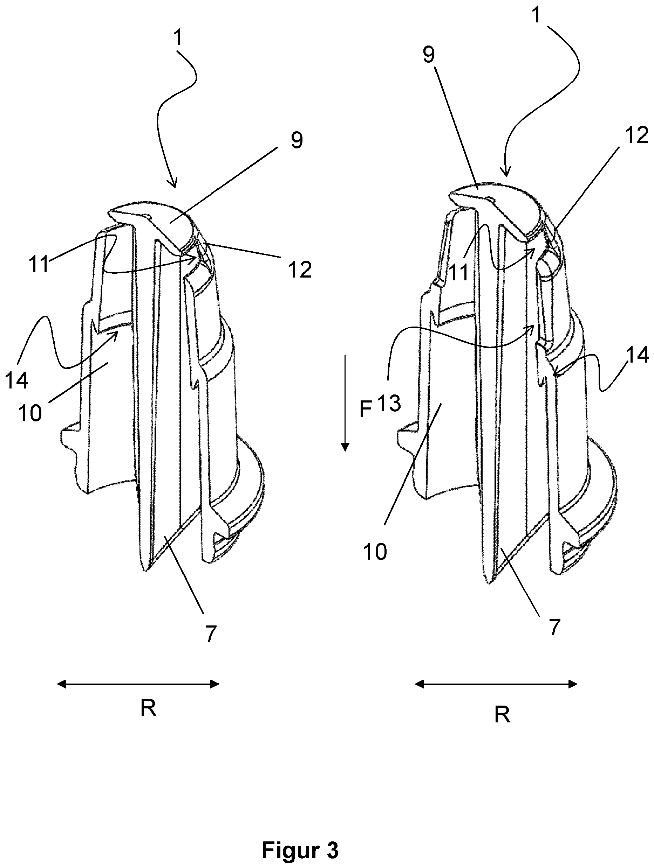

In Figur 3 sind die Gehäuse 10 der Überlaufdorne 1 jeweils geschnitten dargestellt. Dadurch sind die Leitflächen 7 im Inneren der Gehäuse 10 sichtbar. Diese Leitflächen 7 bilden ausgehend von den oberseitigen Öffnungen 11 Strömungskanäle, hier im Wesentlichen vier symmetrische, im Gehäuse 10 der Überlaufdorne 1, um das überströmende Wasser 16 in Fließrichtung F von oben nach unten zu leiten.

Die Leitflächen 7 sind dabei ebenfalls am Deckel 9 angeformt, sie könnten allerdings auch entgegen der Fließrichtung F gesehen oberseitig am Rand der oberseitigen Öffnung 11 enden. Hier jedoch bilden sie durch die Fortsetzung nach oben bis zum Deckel 9 jeweils abgeschlossene Strömungskanäle.

Weiterhin ist aus den Abbildungen in Figur 3 ersichtlich, dass beispielsweise in halber Höhe des Gehäuses 10 eine Stufe 14 in radialer Richtung R ausgebildet ist. Durch diese Stufe 14, den Vorsprung oder die Schulter wird der radiale Innendurchmesser des Gehäuses 10 unmittelbar verändert und das herabfließende Wasser 16 in Fließrichtung F an den Leitflächen 7 in einem radial R mittleren Bereich im Gehäuse 10 gebündelt oder zwangsweise zusammengeführt.

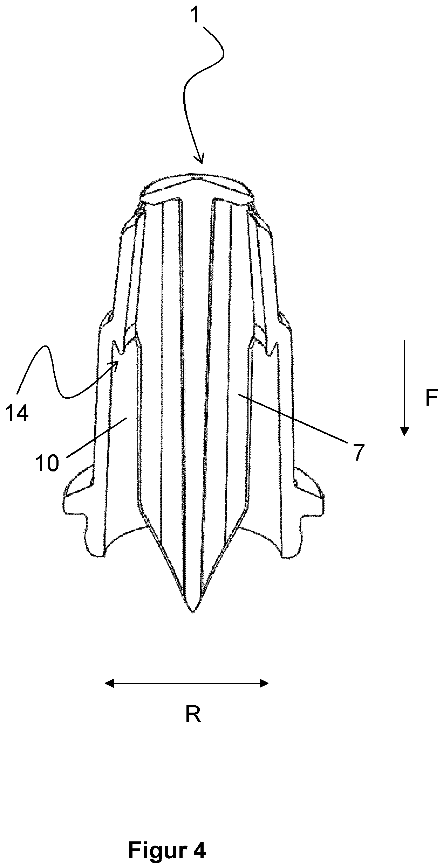

In Figur 4 ist verdeutlicht, dass das Gehäuse 10 des Überlaufdorns 1 beispielsweise ab der Stufe 14 in Fließrichtung F von oben nach unten gesehen nicht mehr in unmittelbarer Verbindung mit den in radialer Richtung R gesehen mittigen Leitflächen 7 in Verbindung steht. Durch diese Trennung von Leitflächen 7 und Gehäuse 10 wird die Bündelung oder Zwangsführung des Wasserstrahls 8 in einem radial R mittigen Bereich zusätzlich unterstützt. Dadurch wird eine verbesserte und einheitliche Bewässerung eines Behälters 2 erhalten, wenn der Wasserstrahl 8 beispielsweise auf den konischen Deckel 9 eines Überlaufdorns 1 auftrifft.

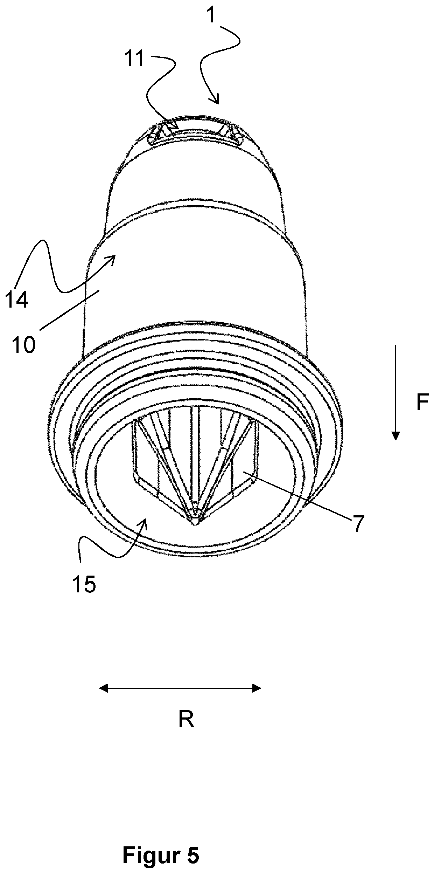

An der Unterseite des Gehäuses 10 beziehungsweise des Überlaufdorns 1, in Fließrichtung F gesehen, sind die Leitflächen 7 am unterseitigen Auslass 15 des Gehäuses 10 des Überlaufdorns 1 nach unten spitz zulaufend in radialer Richtung R gesehen ausgebildet, wie dies insbesondere aus der Figur 5 ersichtlich ist. Durch dieses radial R nach innen Zulaufen der Leitflächen 7, hier beispielsweise vier Stück, es können auch drei oder fünf sein, wird eine Bündelung des Wasserstrahls 8 erhalten für eine gleichmäßige Bewässerung des Behälters 2. Dabei können in Fließrichtung F gesehen die Leitflächen an der Unterkante des Gehäuses 10 enden oder über dieses hinaus nach unten insbesondere spitz zulaufend ausgebildet sein.

Weiterhin kann die Stufe 14, Schulter oder dergleichen im Gehäuse 10 des Überlaufdorns 1 auch derart ausgebildet sein, dass sie auch außenseitig sichtbar ist, also das Gehäuse 10 stufenartig von einer strengen Zylinderform abweicht.

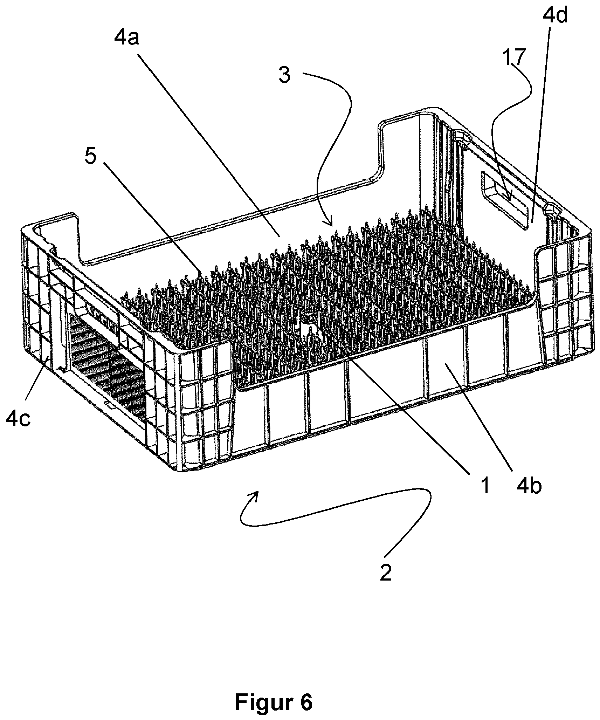

In Figur 6 ist ein Behälter 2 mit einer Grundfläche 3 oder einem Boden sowie vier Seitenwänden 4a, 4b, 4c, 4d perspektivisch abgebildet. Der Behälter 2 ist vorzugsweise als einstückiges Kunststoff-Spritzgussteil ausgebildet. Die Seitenwände 4a, 4b, 4c, 4d weisen im Wesentlichen von der Grundfläche 3 senkrecht nach oben und die Seitenwände 4a, 4b, 4c, 4d und die Grundfläche 3 sind insbesondere derart ausgebildet, dass der Behälter 2 mit gleichartigen Behältern 2 stapelbar ist. Die Grundfläche 3 ist vorzugsweise rechteckig und der Behälter 2 ist bevorzugt in einer im Gartenbau beziehungsweise für Gärtnereien standardisierten Größe ausgebildet. Weiterhin können an den Seitenwänden 4a, 4b, 4c, 4d Griffe 17 beispielsweise als Durchbrüche ausgebildet sein, um den Behälter 1 handhaben zu können. An der Grundfläche 1 sowie den Seitenwänden 4a, 4b, 4c, 4d können auch Verstärkungsrippen oder dergleichen ausgebildet sein, um die Stabilität des Behälters 2 zu erhöhen. Der Behälter 2 ist nach oben offen, um auf seinen Inhalt unmittelbar zugreifen zu können.

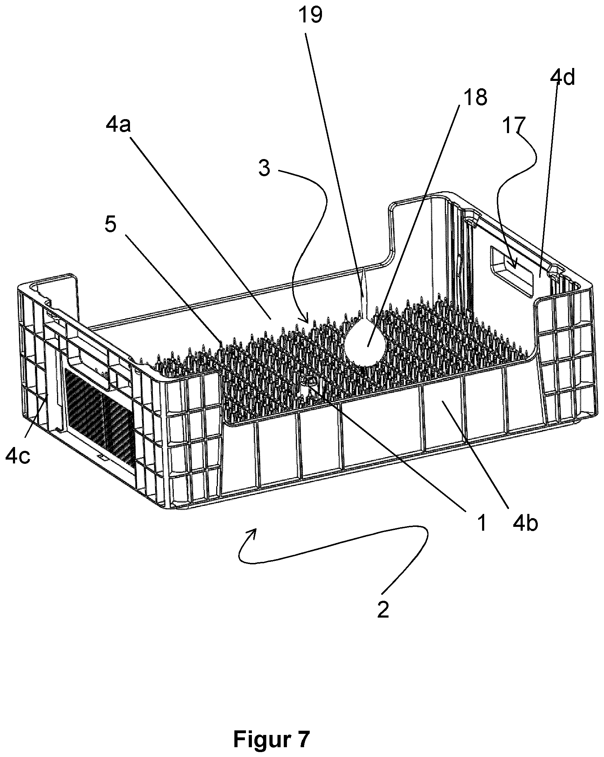

Auf der Grundfläche 3 sind vorzugsweise gleichmäßig verteilt nach oben weisende Dorne 5 ausgebildet. Die Dorne 5 können als integraler Bestandteil des Behälters 1 beim Spritzgießen ausgeformt werden. Auf die Dorne 5 können Blumenzwiebeln 18 aufgesteckt oder aufgespießt werden, wie aus den Figuren 7 bis 9 ersichtlich. Dabei kann eine Blumenzwiebel 18 je nach deren eigener Größe sowie der Größe und dem Abstand der Dorne 5 auch auf mehrere Dorne 5 aufgespießt werden. Die Dorne 5 weisen hierzu eine im Wesentlichen kegel- oder kegelstumpfförmige Gestalt auf.

Weiterhin ist auf der Grundfläche 3, hier mittig, ein Überlaufdorn 1 vorzugsweise ebenfalls einstückig ausgeformt. Der Überlaufdorn 1 weist beispielsweise oberseitig mindestens eine Öffnung 11 auf, so dass überschüssiges Wasser unter anderem von einer automatischen Bewässerungsanlage selbsttätig aus dem Inneren des Behälters 2 nach unten abfließen kann.

In Figur 7 ist die Blumenzwiebel 18 hier bereits mit einem ausgetriebenen Spross 19 abgebildet. Die Blumenzwiebel 18 ist auf mehrere benachbarte Dorne 5 aufgesteckt oder aufgespießt.

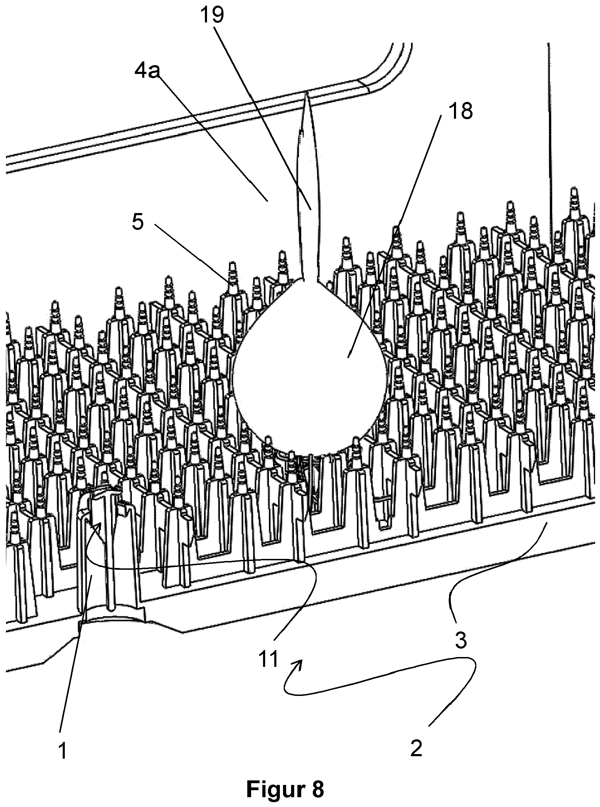

In Figur 8 ist eine weitere Detailvergrößerung der Blumenzwiebel 18 mit ihrem Spross 19 dargestellt, wobei die Blumenzwiebel 18 auf mehrere benachbarte Dorne 5 aufgesteckt ist. Am Überlaufdorn 1 ist die oberseitige Öffnung 11 erkennbar und der Behälter 2 ist mit seiner Grundfläche 3 und hier nur einer Seitenwand 4a ausgeschnitten dargestellt.

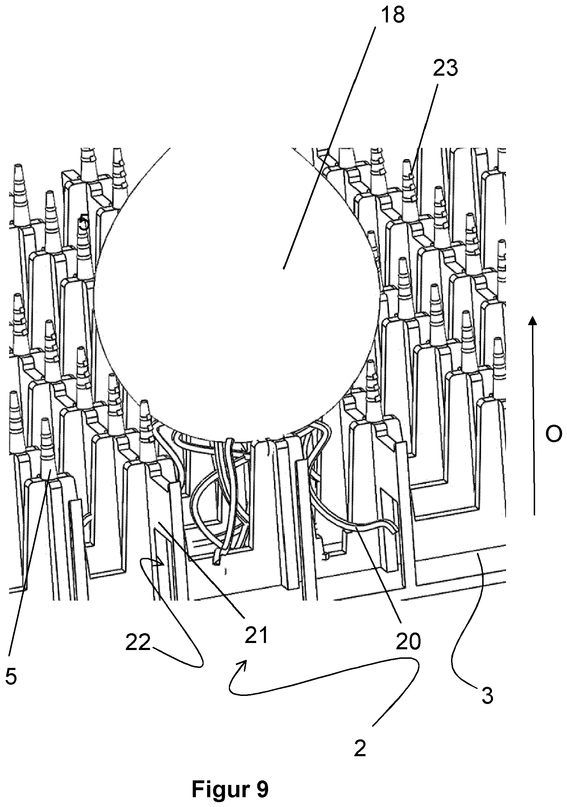

In Figur 9 ist wiederum in einer weiteren vergrößerten Ausschnittdarstellung der Behälter 2 mit seiner Grundfläche 3 und daran einstückig angeformten, nach oben weisenden Dornen 5 abgebildet. Auf die Dorne 5 ist eine Blumenzwiebel 18 aufgesteckt, die Wurzeln 20 ausgebildet hat. Zwischen den Dornen 5 sind Verbindungsstege 21 vorzugsweise ebenfalls einstückig mit diesen ausgeformt. Zwischen den Verbindungsstegen 21, den sie verbindenden Dornen 5 und der Grundfläche 3 des Behälters 1 sind derart Durchlässe 22 ausgebildet. In den Durchlässen 22 können sich die aus der Blumenzwiebel 6 herauswachsenden Wurzeln 13 verschlingen, diese durchgreifen und beispielsweise eine Basis eines Dorns 5 umwinden. Somit wird die Blumenzwiebel 18 trotz ihres Wachstums auf den Dornen 5 durch ihre eigenen Wurzeln 19 gehalten und kann nicht nach oben, wie durch den Pfeil O angedeutet, hochgedrückt werden.

Außerdem sind an den Dornen 5 vorzugsweise einstückig Widerhaken 23, Vorsprünge, Kanten, Schultern oder dergleichen ausgebildet. Diese Widerhaken 23 wirken mit der Blumenzwiebel 18 derart zusammen, dass sie ebenfalls ein nach oben abheben O der Blumenzwiebel 18 bei deren Wachstum verhindern. Das biologische Material der Blumenzwiebel 18 verhakt sich an den Widerhaken 23 der Dorne 5, ohne diese derart zu beschädigen, dass sie nicht mehr wachsen würde.

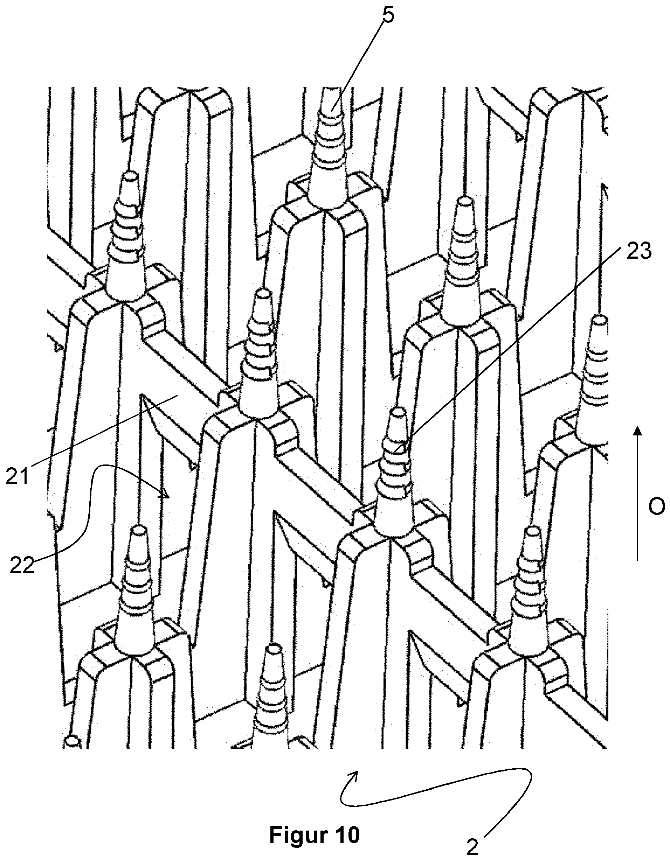

In Figur 10 ist in einer weiter vergrößerten Ausschnittdarstellung der Behälter 2 ohne Grundfläche 3 oder Seitenwände 4 dargestellt. Die im Wesentlichen von der Grundfläche 3 nach oben O weisenden Dorne 5 sind mit Widerhaken 23 ausgestattet, die um die Dorne 5 entweder durchgehend umlaufend ausgebildet sein können oder bevorzugt bei einer Herstellung mit der in der Kunststoff-Spritzgusstechnik bekannten Schiebertechnik nur halbseitig, um das Herauslösen aus der Spritzgussform zu erleichtern. Die Widerhaken 23 sind beispielsweise als Kanten, Schulter, Vorsprünge oder dergleichen ausgebildet. Weiterhin sind zwischen benachbarten Dornen 5 jeweils Verbindungsstege 21 ausgebildet, um Durchlässe 22 zwischen den Dornen 5, den Verbindungsstegen 21 und der Grundfläche 3 zu bilden. Diese Durchlässe 22 können beim Keimen oder beim Wachstum der Blumenzwiebel 6 von deren Wurzeln 19 durchgriffen werden, so dass die Blumenzwiebel 18 zusätzlich durch die Wurzel 19 auf dem Dorn 5 fixiert ist und nicht nach oben O abgehoben oder weggedrückt wird. Die Verbindungsstege 21 oder Rippen müssen nicht notwendigerweise zwischen allen benachbarten Dornen 5 ausgebildet sein sondern können auch jeweils nur reihen- oder zeilenweise vorgesehen werden.

**Bezugszeichenliste:**

| Zeichen | Bezeichnung |
|---|---|
| 1 | Überlaufdorn |
| 2 | Behälter |
| 3 | Grundfläche von 2 |
| 4 | Seitenwand von 2 |
| 5 | Dorn auf 3 |
| 6 | Durchbrechung in 3 |
| 7 | Leitfläche in 1 |
| 8 | Wasserstrahl |
| 9 | Deckel an 1 |
| 10 | Gehäuse von 1 |
| 11 | oberseitige Öffnung an 1 |
| 12 | Steg an 1 |
| 13 | Schlitz an 1 |
| 14 | Stufe in 10 |
| 15 | unterseitiger Auslass an 1 |
| 16 | Wasser |
| 17 | Griff an 4 |
| 18 | Blumenzwiebel |
| 19 | Spross von 18 |
| 20 | Wurzel von 18 |
| 21 | Verbindungssteg zwischen 5 |
| 22 | Durchlass |
| 23 | Widerhaken an 5 |
| F | Fließrichtung von 16 von oben nach unten |
| R | radiale Richtung |
| O | mögliche Bewegungsrichtung von 18 |

## Patentansprüche

1. Behälter (2) insbesondere zur Aufzucht von Blumenzwiebeln und dergleichen mit einer Grundfläche (3) und Seitenwänden (4) und mit einer Durchbrechung (6) in der Grundfläche (3) an der ein Überlaufdorn (1) mit einem Gehäuse (10) angeordnet ist und der Überlaufdorn (1) mit mindestens einer oberseitigen Öffnung (11) ausgestattet ist, um ein Hindurchfließen von einer Flüssigkeit in einer Fließrichtung (F) zu ermöglichen, **dadurch gekennzeichnet, dass** der Überlaufdorn (1) einstückig mit dem Behälter (2) ausgebildet ist.

2. Behälter (2) nach Anspruch 1, **dadurch gekennzeichnet, dass** im Gehäuse (10) des Überlaufdorns (1) Leitflächen (7) für die Flüssigkeit ausgebildet sind.

3. Behälter (2) nach Anspruch 2, **dadurch gekennzeichnet, dass** die Leitflächen (7) im Gehäuse (10) zumindest abschnittsweise nicht mit dem Gehäuse (10) verbunden sind.

4. Behälter (2) nach Anspruch 2 oder 3, **dadurch gekennzeichnet, dass** die Leitflächen (7) im Überlaufdorn (1) in einer Fließrichtung (F) gesehen von oben nach unten spitz zulaufend ausgebildet sind.

5. Behälter (2) nach einem der Ansprüche 1 bis 4, **dadurch gekennzeichnet, dass** im Gehäuse (10) des Überlaufdorns (1) eine Stufe (14) in einer radialen Richtung (R) ausgebildet ist.

6. Behälter (2) nach einem der Ansprüche 1 bis 5, **dadurch gekennzeichnet, dass** an der oberseitigen Öffnung (11) des Gehäuses (10) des Überlaufdorns (1) ein in Fließrichtung (F) ausgerichteter Schlitz (13) ausgebildet ist.

7. Behälter (2) nach einem der Ansprüche 1 bis 6, **dadurch gekennzeichnet, dass** an der oberseitigen Öffnung (11) des Gehäuses (10) des Überlaufdorns (1) ein Deckel (9) angeordnet ist.

8. Behälter (2) nach einem der Ansprüche 1 bis 7, **dadurch gekennzeichnet, dass** im Behälter (2) Positionierungseinrichtungen für Blumenzwiebeln oder dergleichen vorgesehen sind, insbesondere in Form von Dornen (5), die von der Grundfläche (3) nach oben weisen und auf die die Blumenzwiebeln aufsteckbar sind.

9. Behälter (2) nach Anspruch 8, **dadurch gekennzeichnet, dass** die Dornen (5) mit Widerhaken (23) ausgestattet sind.

10. Behälter (2) nach Anspruch 8 oder 9, **dadurch gekennzeichnet, dass** die Widerhaken (23) an einem Umfang der Dorne (5) um diese zumindest teilweise oder halbseitig umlaufend ausgebildet sind.

11. Behälter (2) nach einem der Ansprüche 8 bis 10, **dadurch gekennzeichnet, dass** zwischen den Dornen (5) Verbindungsstege (21) mit Durchlässen (22) zwischen den Verbindungsstegen (21) und der Grundfläche (3) ausgebildet sind.

12. Verfahren zur Herstellung eines Behälters (2) mit Überlaufdorn (1) nach einem der Ansprüche 1 bis 11, **dadurch gekennzeichnet, dass** der Behälter (2) mit dem Überlaufdorn (1) einstückig hergestellt wird.

13. Verfahren nach Anspruch 12, **dadurch gekennzeichnet, dass** der Behälter (2) mit dem Überlaufdorn (1) in einem Kunststoff-Spritzgießverfahren hergestellt wird.
